# EUROPEAN PATENT SPECIFICATION

(11) **EP 4 368 417 B1**
(45) Date of publication and mention of the grant of the patent: **25.02.2026**
(21) Application number: 23208903.7
(22) Date of filing: 09.11.2023
(51) Int. Cl.: B60C 15/06, B60C 9/02, B60C 9/28, B60C 15/00, B60C 11/03, B60C 13/00, B60C 15/04, B60C 9/20

(54) **PNEUMATIC RADIAL TIRE**
RADIALER LUFTREIFEN
PNEUMATIQUE RADIAL

(30) Priority: 11.11.2022 US 202218054589
(43) Date of publication of application: 15.05.2024
(73) Proprietor: The Goodyear Tire & Rubber Company, Akron, OH 44316 (US)
(72) Inventor: PASSANTE SPACCAPIETRA, Ettore, L-9070 Ettelbruck (LU); MULLER, Philippe Joseph Auguste, B-6971 Champlon (BE); BONNET, Gilles, L-9176 Niederfeulen (LU); BARRIERE, Didier, B-6860 Leglise (BE); BOKKEN, Stéphane Laurent Claude, B-6690 Vielsalm (BE); THIRY, Christophe Francois Edmond, B-6690 Vielsalm (BE); CELIK, Ceyhan, Stow, 44224 (US); MERSCH, Romain Jack Rodolphe, L-7519 Mersch (LU); GILLICK, James Gregory, Akron, 44313 (US)
(74) Representative: Kutsch, Bernd

(56) References cited:
- EP-A1- 0 846 063
- EP-A1- 3 599 108
- EP-A1- 3 798 019
- JP-A- 2007 045 333
- US-A1- 2020 331 302

## Description

### Field of the Invention

The present invention relates to a pneumatic radial tire. More particularly, the present invention relates to the structure of a radial ply tire for passenger vehicles such as cars but also light trucks, buses, coaches and the like.

### Background of the Invention

In an effort to reduce vehicle emissions and to conserve fuel, there continues to be a long felt need to reduce rolling resistance of tires, which can be achieved by reducing the weight of the tires. Reducing tire weight can be accomplished by reducing rubber thickness, for example in the sidewall portion and/or bead portions, and/or by reducing weight of the internal structure of the tire, such as of reinforcing elements. However, any reduction in the weight of the tire should desirably be accomplished in a manner that does not compromise tire performance characteristics and/or service life. In particular, weight reduction can be of particular interest for tires of passenger cars that make up the majority of vehicles in road traffic.

Therefore, there is a need to provide a lightweight pneumatic radial tire upholding the usual quality in tire performance, such as stiffness and durability. It was found that the pneumatic radial tire achieves these objectives.

EP 3 599 108 A1 describes a tire in accordance with the preamble of claim 1.

### Summary of the Invention

The invention relates to a tire in accordance with claim 1.

Dependent claims refer to preferred embodiments of the invention.

Therefore, the present invention preferably relates to a pneumatic radial tire comprising a tire carcass comprising: a tread portion comprising a tread disposed on the tire carcass; a pair of sidewall portions adjacent to the tread portion; a carcass ply P_{C} extending circumferentially about the tire and exhibiting two ply endings, wherein each ply ending comprises a first contact section S₁ adjacent to a turn-up section S_{T} adjacent to a second contact section S₂, said second contact section forming the end portion of the ply ending; a pair of bead portions adjacent to the sidewall portions, wherein each bead portion comprises a bead core, one or more apex elements and one of the two ply endings of P_{C}, wherein, in each bead portion, the ply ending comprised therein forms a sealed enclosure containing the bead core, said sealed enclosure exhibiting a ply-to-ply contact section S_{C} formed by the first contact section S₁ and the second contact section S₂, and further exhibiting a surrounding section formed by the turn-up section S_{T}; wherein, in each bead portion, at least one apex element E_{A} of the one or more apex elements is located axially outwards from the ply-to-ply contact section S_{C} and wherein at least a portion of the axially inward surface of said at least one apex element E_{A} is in direct contact with the axially outward surface of the ply-to-ply contact section S_{C}.

### Definitions

In the context of the present invention, the term "in direct contact with" in the expression "at least one apex element E_{A} is in direct contact with the radially outward surface of the ply-to-ply contact section S_{C}" means that there is no material or compound or layer located between the apex element E_{A} and the axially outward surface of ply-to-ply contact section.

In the context of the present invention, the term "ply-to-ply contact section" refers to a section wherein the first contact section S₁ of P_{C} and the second contact section S₂ of P_{C} are in direct contact with each other to form the sealed enclosure.

In the context of the present invention, the term "tread portion" relates to a portion/section of the tire carcass onto which the tread is disposed.

### Brief Description of the Drawings

The invention will be described by way of example and with reference to the accompanying drawings in which:
FIG. 1 is a schematic fragmental cross-sectional view of a preferred embodiment of a tire according to the present invention;
FIG. 2 is an enlarged fragmental cross-sectional view of the bead portion of a preferred embodiment of a tire according to the present invention;
FIG. 3 is a schematic fragmental cross-sectional view of a preferred embodiment of a tire according to the present invention;
FIG. 4 is a schematic fragmental cross-sectional view of an enlarged portion of a tire according to a preferred embodiment of the present invention.
FIG. 5 is a spider chart comparing the pneumatic radial tire properties of the present invention compared to a pneumatic radial tire known in the art.

### Detailed Description of Preferred Embodiments of the Invention

Disclosed is a pneumatic radial tire comprising a tire carcass comprising a tread portion comprising a tread disposed on the tire carcass; a pair of sidewall portions adjacent to the tread portion; a carcass ply P_{C} extending circumferentially about the tire and exhibiting two ply endings, wherein each ply ending comprises a first contact section S₁ adjacent to a turn-up section S_{T} adjacent to a second contact section S₂, said second contact section forming the end portion of the ply ending; a pair of bead portions adjacent to the sidewall portions, wherein each bead portion comprises a bead core, one or more apex elements and one of the two ply endings of P_{C}, wherein, in each bead portion, the ply ending comprised therein forms a sealed enclosure containing the bead core, said sealed enclosure exhibiting a ply-to-ply contact section S_{C} formed by the first contact section S₁ and the second contact section S₂, and further exhibiting a surrounding section formed by the turn-up section S_{T}; wherein, in each bead portion, at least one apex element E_{A} of the one or more apex elements is located axially outwards from the ply-to-ply contact section S_{C} and wherein at least a portion of the axially inward surface of said at least one apex element E_{A} is in direct contact with the axially outward surface of the ply-to-ply contact section S_{C}.

Preferably, in each bead portion, the ply ending is turned-up radially outwards and, in the ply-to-ply contact section S_{C}, the second contact section S₂ is located axially outwards from the first contact section S₁.

Preferably, in each bead portion, none of the one or more apex elements is contained in the sealed enclosure.

Preferably, the carcass ply P_{C} comprises a rubber composition and reinforcing cords embedded in the rubber composition.

Preferably, the reinforcing cords are metal cords, such as steel, or organic fiber cords, more preferably the reinforcing cords are made of organic fibers. More preferably the organic fiber cords are made of one or more of polyester, rayon, nylon, aromatic polyamide, such as aramid, more preferably one or more of polyester and aromatic polyamide, such as aramid. In the context of the present invention, it is believed that using organic fibers such as aramid fibers for reinforcing the ply permits to reduce the weight of the tires which is beneficial for the overall properties of such tires.

Preferably, the carcass ply P_{C} has a radial ply structure. In other words, it is a "radial ply" which means that said ply has reinforcing cords which are oriented at an angle of between 65° and 90° with respect to the equatorial plane A of the tire.

When the tire is mounted onto the nominal ETRTO rim and inflated at 2.2 bar, the ply ending height H_{P} in each bead portion is in the range of from 1.0 to 1.75 inches (1 inch = 2.54 cm), more preferably in the range of from 1.24 to 1.6 inches, the ply ending height H_{P} being defined as the radial distance between the bead toe and the end point of the ply ending. In the context of the present invention, the bead toe represents the lowest "point" of the tire in each bead portion.

Preferably, each bead core has a substantially pentagonal cross-section, more preferably a pentagonal cross-section.

Preferably, at least two sides of the substantially pentagonal cross-section of the bead core have the same length, more preferably two sides of the substantially pentagonal cross-section of the bead core have the same length.

Preferably, each bead core comprises an elastomeric composition and bead wires.

Preferably, each bead wire is made of metallic filaments. Preferably, the metallic filaments of each bead wire are made of steel. Preferably, each bead wire has a diameter in the range of from 0.7 to 1.2 mm.

Preferably, the bead wires of the bead core are surrounded by the elastomeric composition and arranged next to each other forming a bead core layer.

Preferably, the bead core comprises more than one bead core layer, the layers being arranged on top of one other for forming the substantially pentagonal bead core cross section.

Preferably, the shortest layer is the top layer and the far most layer of the top layer is the bottom layer. Preferably, the width of the bottom layer is in the range of from 2 to 6 mm. Preferably, the width of the top layer is in the range of from 0.7 to 2.4 mm.

Preferably, the maximum axial width of the bead core is in the range of from 3 to 10 mm.

When the tire is mounted onto the nominal ETRTO rim and inflated at 2.2 bar, the apex height H_{A} in each bead portion is in the range of from 1.1 to 2.5 inches (1 inch = 2.54 cm), preferably in the range of from 1.3 to 2.2 inches, the apex height H_{A} being defined as the maximum radial distance between the bead toe and the at least one apex element E_{A}, with H_{A} > H_{P}, H_{P} being the ply ending height as defined herein above.

Preferably, each apex element is an extrudate. Preferably, each apex element comprises at least one polymer. It is believed that the apex elements used in the present invention permits to provide a specific rigidity and stiffness to the tire due to its position in the tire and/or chemical composition. Preferably, each bead portion comprises one apex element.

Preferably, in the bead portions, no reinforcing member is in direct contact with at least a part of the outer surface of the sealed enclosure formed by the ply ending.

Preferably, no reinforcing member is located in the bead portions.

Preferably, the reinforcing member is a layer comprising a fabric or metallic wires, such as steel wires. In the context of the present invention, it is believed that reinforcing member(s) (or chipper(s)) are not necessary to reinforce the bead portions thanks to the particular disposition of the ply, the bead core and the one or more apex elements in each bead portion. Reinforcing member and chipper are used interchangeably in the present invention.

Preferably, the sealed enclosure comprises only the bead core.

Preferably, the tread comprises one or more grooves and one or more layers of a polymeric composition.

Preferably, when the tire is mounted onto the nominal ETRTO rim and inflated at 2.2 bar, the tire further comprises an overlay ply and a belt layer, the overlay ply being located between the tread and the belt layer and the belt layer being located between the overlay ply and the carcass ply. Preferably, the belt layer comprises one or more belt plies, wherein at least one belt ply P_{B} of the one or more belt plies has a radial width W_{PB}, in the range of from 80 to 100 percent, more preferably from 85 to 95 percent, more preferably from 88 to 92 percent, W_{R}, W_{R} being the rim width.

Preferably, the belt layer comprises two belt plies.

Preferably, when the tire is mounted onto the nominal ETRTO rim and inflated at 2.2 bar, the at least one belt ply P_{B} is arranged in parallel to the carcass ply P_{C} over an axial width Wₚₐᵣ, wherein Wₚₐᵣ is in the range of from 80 to 95 percent, more preferably in the range of from 85 to 90 percent, W_{R} with Wₚₐᵣ < W_{PB}.

Preferably, when the tire is mounted onto the nominal ETRTO rim and inflated at 2.2 bar, the tread, comprising one or more grooves 12, has a thickness T_{GB} being in the range of from 1 to 3.4 mm, more preferably in the range of from 1.2 to 2.2 mm, more preferably of about 1.5 mm, T_{GB} being defined as the minimal radial distance between the deepest outer surface of the one or more grooves 12 and the outmost surface of the overlay ply.

Preferably, the at least one belt ply comprises a rubber composition comprising, embedded therein, reinforcing wires.

Preferably, the reinforcing wires are one or more of metal wires and organic fiber wires, preferably metal reinforcing wires or organic fiber reinforcing wires. Preferably, the metal of the metal reinforcing wires is steel. Preferably, the reinforcing wires are metal reinforcing wires.

Alternatively, preferably, the reinforcing wires are organic fiber reinforcing wires. Preferably, the organic fiber of the organic fiber reinforcing wires is made of one or more of polyester, rayon, nylon and aromatic polyamide, preferably made of aromatic polyamide, such as aramid. More preferably, the at least one belt ply P_{B} comprises a rubber composition comprising, embedded therein, aramid reinforcing wires. Preferably, the aramid reinforcing wires are arranged in a parallel arrangement, a woven arrangement, or a knitted arrangement.

Each sidewall portion extends radially upward from each bead portion towards the tread portion.

Preferably, each sidewall portion comprises a sidewall layer extending from the outer surface of the carcass ply to the outer surface of the sidewall portion and having a thickness T_{SW}, wherein T_{SW} has a minimum value in the range of from 1 to 5 mm, more preferably in the range of from 1.5 to 2.5 mm, more preferably of 2 mm.

Preferably, the tire is designed for being mounted onto the nominal ETRTO rim, wherein the tire is more preferably inflated at a pneumatic pressure of 2.2 bar.

Preferably, when the tire is mounted onto the nominal ETRTO rim and inflated at 2.2 bar, the axial ply width W_{P} is in the range of from 95 to 116 percent W_{R}, more preferably from 108 to 116 percent W_{R}, W_{R} being the axial rim width, the axial ply width W_{P} being defined as the maximum axial distance between the carcass ply in the first sidewall portion and the carcass ply in the second sidewall portion.

Preferably, the pneumatic radial tire of the present invention is a pneumatic radial tire for passenger vehicles such as cars but also light trucks, buses, coaches and the like. More preferably, the pneumatic tire is a pneumatic radial tire for passenger cars.

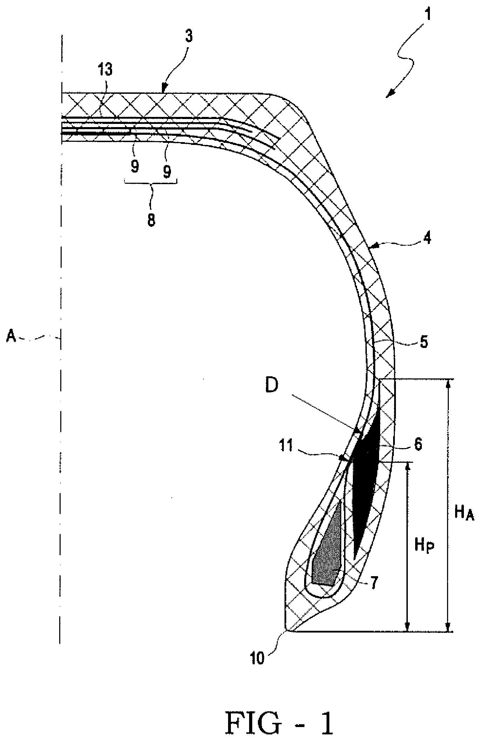

FIG. 1 is a schematic fragmental cross-sectional view of a preferred embodiment of a tire according to the present invention. The pneumatic radial tire 1 comprises a tread 3, a pair of sidewall portions, including the sidewall portion 4, the second one being not shown in the figure, adjacent to the tread, a carcass ply 5 (P_{C}) extending circumferentially about the tire 1 and exhibiting two ply endings or ply ending portions 20, only one is shown in FIG. 1, wherein each such ply ending or ply ending portion 20 comprises a first ply contact section 21 adjacent to and radially outwards of a ply turn-up section 22, said ply turn-up section 22 being adjacent to a second ply contact section 23, said second ply contact section 23 forming the end of the ply ending or ply ending portion 20 and being radially outwards of the ply turn-up section 22, a pair of bead portions adjacent to the sidewall portions 4, wherein each bead portion comprises a bead core 7, an apex element 6 and one of the two ply endings or ply endings portions 20 of the carcass ply 5. Each sidewall portion 4 extends radially upward from each bead portion towards the tread portion.

In each bead portion, the ply ending or ply ending portion 20 comprised therein forms a sealed enclosure 30 containing the bead core 7, said sealed enclosure 30 exhibiting a ply-to-ply contact section 11 (S_{C}) formed by the first ply contact section 21 and the second ply contact section 23, and further exhibiting a surrounding section formed by the ply turn-up section 22.

The apex element 6 is located axially outwards from the ply-to-ply contact section 11 and at least a portion of the axially inward surface of said apex element 6 is in direct contact with the axially outward surface of the ply-to-ply contact section 11.

Preferably, the apex element 6 extends from radially innermost point 31 to a radially outermost point 32, the radially innermost point 31 overlapping with the bead core 7 when viewed in the axial direction and the radially outermost point 32 being radially outwards of the ply-to-ply contact section 11.

The tire 1 preferably further comprises an overlay ply 13 and a belt layer or belt package 8 comprising one or more belts 9, preferably two belts 9. The overlay ply 13 is located radially between the tread 3 and the belt layer 8. The belt layer or belt package 8 is located radially between the overlay ply 13 and the carcass ply 5. D represents the radially upmost or outermost point of the second ply contact section 23 of the ply ending or ply ending portion 20 and A represents a symmetric center plan of the tire 1. H_{P} is the height of the end of the ply ending or ply ending portion, which is measured relative to the bead toe 10 in the radial direction. H_{A} is the apex element height, i.e., ending at the radially outermost point 32, and is also measured relative to the bead toe 10.

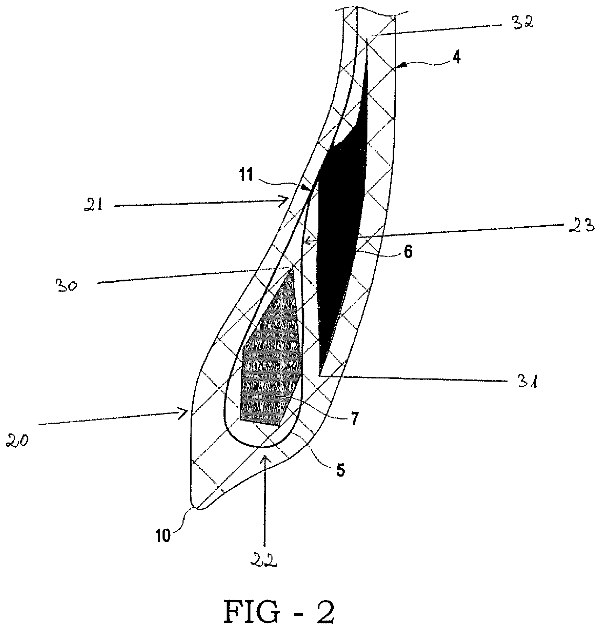

FIG. 2 is an enlarged portion of the tire of FIG. 1, showing the bead core 7 having a preferably substantially pentagonal cross-section, the apex element 6 and the ply-to-ply contact section 11. The bead core 7 is the preferably only element in the sealed enclosure.

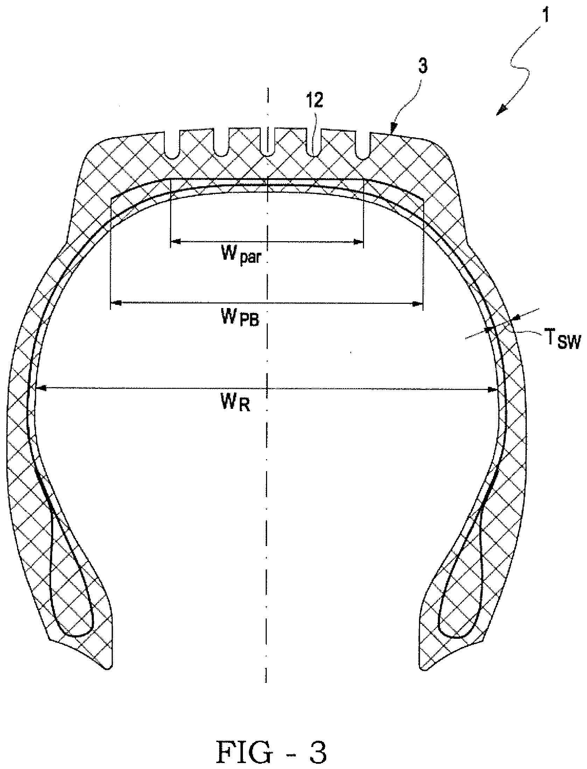

FIG. 3 is a schematic fragmental cross-sectional view of a preferred embodiment of the tire according to the present invention. The tire 1 comprises the same elements as in FIG.1 but not all are shown in FIG.3. Said tire 1 is mounted onto the nominal ETRTO rim and inflated at 2.2 bar. Fig. 3 shows the sidewall layer thickness T_{SW}, the radial width Wₚₐᵣ over which the one or more belts 9 in the belt layer or belt package 8 are arranged in parallel to the carcass ply 5, the axial width W_{PB} of belt layer or belt package 8 and also the axial width of the rim W_{R}.

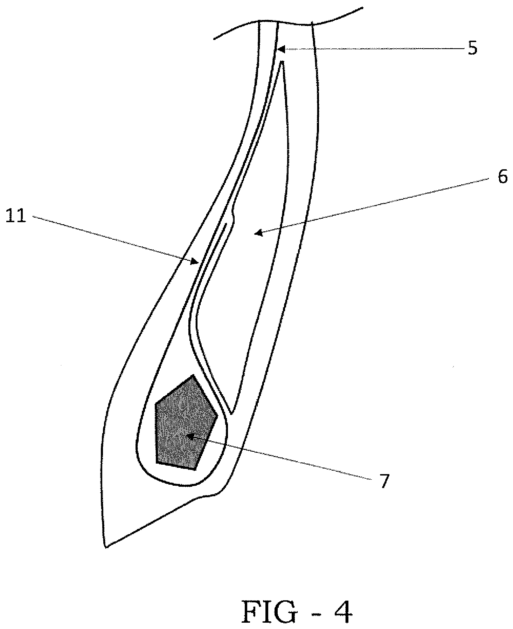

FIG. 4 is a schematic fragmental cross-sectional view of a preferred embodiment of an enlarged portion of a tire according to the present invention. As may be seen on FIG. 4, the enlarged portion of the tire 1 focuses on the bead portion. Indeed, the bead portion comprises the bead core 7, the apex element 6 and the carcass ply 5 which encloses the bead core 7.

The ply-to-ply contact section 11 is in direct contact with at least a portion of the apex element 6.

Preferably, the ply-to-ply contact section 11 is in direct contact with the axially innermost surface of the apex element 6.

A portion of the carcass ply 5 radially above and below said ply-to-ply contact section 11 is preferably also in contact with the apex element.

Preferably, the bead core 7 is the only element in the sealed enclosure 30. The bead core 7 preferably comprises an elastomeric composition and bead wires.

A difference between Fig. 4 and Figs. 1 and 2 is the shape of the apex element 6.

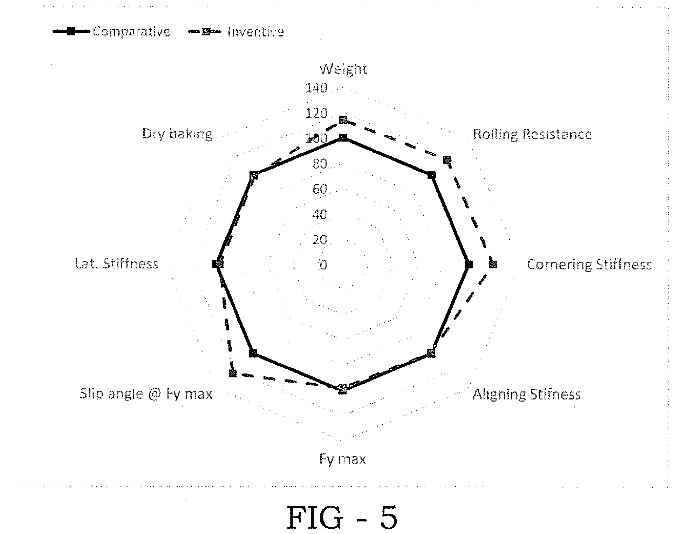

FIG. 5 is a spider chart comparing the pneumatic radial tire properties of a tire according to the present invention compared to a pneumatic radial tire known in the art. For the forces and moments and braking, the tested tires have been mounted on a 9.5" rim and inflated at 2.9 bar. For the rolling resistance (RR), the tested tires have been mounted on a 9" rim and inflated at 2.5 bar. As may be taken from Fig. 5, the pneumatic radial tire of the present invention has a lower weight, exhibits reduced (improved) rolling resistance (RR), an improved cornering stiffness and shows lower slip angle at Fy max compared to a tire known in the art which comprises neither a ply-to-ply contact section nor an apex element located radially outwards from the ply-to-ply contact section, wherein at least a portion of the radially inward surface of said apex element is in direct contact with the radially outward surface of the ply-to-ply contact section as required by the present invention. Further, the cords and wires used in the inventive tire were those defined in the present invention and different from those in the prior art tire. Further, it is noted that the dry braking, lateral stiffness, aligning stiffness and Fy max for the tire of the present invention are as good as the tire known in the art.

## Claims

1. A pneumatic radial tire comprising a tire carcass, the tire (1) comprising
a tread portion comprising a tread (3) disposed on the tire carcass;
a pair of sidewall portions (4) adjacent to the tread portion;
a carcass ply (5, P_{C}) extending circumferentially about the tire (1) and exhibiting two ply ending portions (20), wherein each ply ending portion (20) comprises a first ply contact section (21, S₁) adjacent to a ply turn-up section (22, S_{T}), said ply turn-up section (22, S_{T}) being adjacent to a second ply contact section (23, S₂), said second ply contact section (23, S₂) forming or including the end of the ply ending portion (20);
a pair of bead portions adjacent to the sidewall portions (4), wherein each bead portion comprises a bead core (7), one or more apex elements (6) and one of the two ply ending portions (20) of said carcass ply (5, P_{C}),
wherein, in each bead portion, the ply ending portion (20) comprised therein forms a sealed enclosure (30) containing the bead core (7), said sealed enclosure (30) exhibiting a ply-to-ply contact section (11, S_{C}) formed by the first ply contact section (21, S₁) and the second ply contact section (22, S₂), and further exhibiting a surrounding section formed by the ply turn-up section (22, S_{T});
wherein, in each bead portion, at least one apex element (6, E_{A}) of the one or more apex elements (6) is located axially outwards from the ply-to-ply contact section (11, S_{C}) and wherein at least a portion of the axially inward surface of said at least one apex element (6, E_{A}) is in direct contact with an axially outward surface of the ply-to-ply contact section (11, S_{C});
and; wherein the apex height (H_{A}) is greater than the ply ending height (H_{P}), the ply ending height (H_{P}) being defined as the radial distance between the bead toe (10) and the radial outermost point or end of the ply ending portion (20);
**characterized in that,** when the tire (1) is mounted onto the nominal ETRTO rim and inflated at 2.2 bar,
(i) the ply ending height (H_{P}) in each bead portion is in the range of from 2.54 cm to 4.46 cm, the ply ending height (H_{P}) being defined as the radial distance between the bead toe (10) and the radial outermost point or end of the ply ending portion (20); and
(ii) the apex height (H_{A}) in each bead portion is in the range of from 2.79 cm to 6,35 cm, the apex height (H_{A}) being defined as the maximum radial distance between the bead toe and the at least one apex element (E_{A}).

2. The pneumatic radial tire of claim 1, wherein, in each bead portion, the ply ending portion (20) is turned-up radially outwards and wherein in the ply-to-ply contact section (11, S_{C}), the second ply contact section (22, S₂) is located axially outwards from the first contact section (21, S₁).

3. The pneumatic radial tire of claim 1 or 2, wherein, in each bead portion, none of the one or more apex elements (6) is contained in the sealed enclosure (30).

4. The pneumatic radial tire of at least one of the previous claims, wherein each bead core (7) has a substantially pentagonal cross-section, and, optionally, wherein at least two sides of the substantially pentagonal cross-section of the bead core (7) have the same length.

5. The pneumatic radial tire of at least one of the previous claims, wherein each bead core (7) comprises an elastomeric composition and bead wires.

6. The pneumatic radial tire of at least one of the previous claims, wherein, in the bead portions, no reinforcing member is in direct contact with at least a part of the outer surface of the sealed enclosure (30) formed by the ply ending portion (20).

7. The pneumatic radial tire of at least one of the previous claims, wherein the tread (3) comprises one or more grooves (12) and one or more layers of a polymeric composition.

8. The pneumatic radial tire of at least one of the previous claims, wherein, when the tire (1) is mounted onto the nominal ETRTO rim and inflated at 2.2 bar, the tire (1) further comprises an overlay ply (13) and a belt layer or belt package (8) comprising one or more belt plies (9), the overlay ply (13) being located between the tread (3) and the belt layer or belt package (8) and the belt layer or belt package (8) being located between the overlay ply (13) and the carcass ply (5); wherein at least one belt layer or belt ply (9, P_{B}) has an axial width (W_{PB}) in the range of from 80 to 100 percent, preferably 85 to 95 percent, of the axial rim width (W_{R}).

9. The pneumatic radial tire of claim 8, wherein, when the tire (1) is mounted onto the nominal ETRTO rim and inflated at 2.2 bar,
(i) the at least one belt layer or ply (9, P_{B}) is arranged in parallel to the carcass ply (5, P_{C}) over an axial width (Wₚₐᵣ), wherein said axial width (Wₚₐᵣ) is in the range of from 80 to 95 percent of said axial rim width (W_{R}) with Wₚₐᵣ < W_{PB}; and/or
(ii) the tread (3), comprising one or more grooves (12), has a radial thickness (T_{GB}) being in the range of from 1 to 3.4 mm, said radial thickness (T_{GB}) being defined as the minimal radial distance between the deepest outer surface of the one or more grooves (12) and the radially outmost surface of the overlay ply (13).

10. The pneumatic radial tire of at least one of the previous claims 8 or 9, wherein the at least one belt ply (9, P_{B}) comprises a rubber composition comprising, embedded therein, reinforcing wires or cords, preferably steel or aramid wires or cords.

11. The pneumatic radial tire of at least one of the previous claims, wherein each sidewall portion (4) comprises a sidewall layer extending from the axially outer surface of the carcass ply (5) to the axially outer surface of the sidewall portion and having a thickness (T_{S}), wherein said thickness (T_{SW}) has a minimum value in the range of from 1 to 5 mm.

12. The pneumatic radial tire of at least one of the previous claims, wherein, when the tire (1) is mounted onto the nominal ETRTO rim and inflated at 2.2 bar, the axial carcass ply width (W_{P}) is in the range of from 95 to 116 percent of the rim width (W_{R}), the ply width (W_{P}) being defined as the maximum axial distance between the carcass ply (5) in the first sidewall portion and the carcass ply (5) in the second sidewall portion.

13. The pneumatic radial tire of at least one of the previous claims, wherein the tire (1) is a pneumatic radial tire for passenger cars.

## Patentansprüche

1. Radialer Luftreifen, der eine Reifenkarkasse umfasst; wobei der Reifen (1) Folgendes umfasst:
einen Abschnitt in Form einer Lauffläche, der eine Lauffläche (3) umfasst, die auf der Reifenkarkasse angebracht ist;
ein Paar von Abschnitten in Form von Seitenwänden (4), die an den Abschnitt in Form einer Lauffläche angrenzen;
eine Karkassenlage (5, P_{c}), die sich in umlaufender Richtung um den Reifen (1) erstreckt und zwei Abschnitte in Form eines Lagenabschlusses (20) aufweist; wobei jeder Abschnitt in Form eines Lagenabschlusses (20) eine erste Strecke (21, S₁) umfasst, die dazu bestimmt ist, mit der Lage in Kontakt zu kommen, die an eine Strecke in Form eines Lagenumschlags (22, S_{T}) angrenzt; wobei die oben genannte Strecke in Form eines Lagenumschlags (22, S_{T}) an eine zweite Strecke (23, S²) angrenzt, die dazu bestimmt ist, mit einer Lage in Kontakt zu kommen; wobei die oben genannte zweite Strecke (23, S₂), die dazu bestimmt ist, mit einer Lage in Kontakt zu kommen, das Ende des Abschnitts in Form eines Lagenabschlusses (20) bildet oder dieses Ende enthält;
ein Paar von Abschnitten in Form von Wulsten, die an die Abschnitte in Form von Seitenwänden (4) angrenzen; wobei jeder Abschnitt in Form eines Wulstes einen Wulstkern (7), ein oder mehrere Elemente in Form eines Kernprofils (6) und einen der beiden Abschnitte in Form von Lagenabschlüssen (20) der oben genannten Karkassenlage (5, P_{c}) umfasst;
wobei in jedem Abschnitt in Form eines Wulstes der darin umfasste Abschnitt eines Lagenabschlusses (20) einen dicht verschlossenen Raum (30) bildet, der den Wulstkern (7) enthält; wobei der oben genannte dicht verschlossene Raum (30) eine Strecke (11, S_{c}) aufweist, die dazu bestimmt ist, mit der Lage in Kontakt zu kommen, die durch die erste Strecke (21, S₁), die dazu bestimmt ist, mit einer Lage in Kontakt zu kommen, und durch die zweite Strecke (23, S₂) die dazu bestimmt ist, mit einer Lage in Kontakt zu kommen, gebildet wird; und ferner eine umgebende Strecke aufweist, die durch die Strecke in Form eines Lagenumschlags (22, S_{T}) gebildet wird;
wobei in jedem Abschnitt in Form eines Wulstes zumindest ein Element in Form eines Kernprofils (6, E_{A}) unter den einen oder mehreren Elementen in Form eines Kernprofils (6) in der axialen Richtung außerhalb der Strecke (11, S_{c}) für den Lage zu Lage-Kontakt angeordnet ist; und wobei zumindest ein Abschnitt der inneren Oberfläche in der axialen Richtung des oben genannten mindestens einen Elements in Form eines Kernprofils (6, E_{A}) in direktem Kontakt mit einer äußeren Oberfläche in der axialen Richtung der Strecke (11, S_{c}) für den Lage zu Lage-Kontakt steht; und
wobei die Höhe (H_{A}) des Kernprofils größer ist als die Höhe (H^{P}) des Lagenabschlusses; wobei die Höhe (H_{P}) des Lagenabschlusses als der Abstand in der radialen Richtung zwischen der Wulstzehe (10) und dem äußersten Punkt in der radialen Richtung oder dem Ende des Abschnitts in Form eines Lagenabschlusses (20) definiert ist;
**dadurch gekennzeichnet, dass**, wenn der Reifen (1) auf die ETRTO-Nennfelge angebracht und auf einen Druck von 2,2 bar aufgepumpt ist:
(i) die Höhe (H_{P}) des Lagenabschlusses in jedem Abschnitt in Form eines Wulstes in dem Bereich zwischen 2,54 cm und 4,46 cm liegt; wobei die Höhe (H_{P}) des Lagenabschlusses als der Abstand in der radialen Richtung zwischen der Wulstzehe (10) und dem äußersten Punkt in der radialen Richtung oder dem Ende des Abschnitts in Form eines Lagenabschlusses (20) definiert ist; und
(ii) wobei die Höhe (H_{A}) des Kernprofils in jedem Abschnitt in Form eines Wulstes in dem Bereich zwischen 2,79 cm und 6,35 cm liegt; wobei die Höhe (H_{A}) des Kernprofils als der maximale Abstand in der radialen Richtung zwischen der Wulstzehe und dem Element in Form eines Kernprofils (E_{A}) definiert ist.

2. Radialer Luftreifen nach Anspruch 1, wobei in jedem Abschnitt in Form eines Wulstes die Strecke in Form eines Lagenabschlusses (20) nach oben und außen in der radialen Richtung umgeschlagen ist; und wobei in der Strecke (11, S_{c}) für den Lage zu Lage-Kontakt, die zweite Strecke für den Kontakt mit der Lage (22, S₂) in der radialen Richtung außerhalb der ersten Strecke (21, S₁) angebracht ist, die dazu bestimmt ist, mit der Lage in Kontakt zu kommen.

3. Radialer Luftreifen nach Anspruch 1 oder 2, wobei in jedem Abschnitt in Form eines Wulstes keines der oben genannten einen oder mehrere Elemente in Form eines Kernprofils (6) in dem dicht verschlossenen Raum (30) enthalten ist.

4. Radialer Luftreifen nach mindestens einem der vorhergehenden Ansprüche, wobei jeder Wulstkern (7) einen im Wesentlichen fünfeckigen Querschnitt aufweist und wobei optional mindestens zwei Seiten des im Wesentlichen fünfeckigen Querschnitts des Wulstkerns (7) die gleiche Länge aufweisen.

5. Radialer Luftreifen nach mindestens einem der vorhergehenden Ansprüche, wobei jeder Wulstkern (7) eine Elastomerzusammensetzung und Wulstkabel umfasst.

6. Radialer Luftreifen nach mindestens einem der vorhergehenden Ansprüche, wobei in den Abschnitten in Form von Wulsten kein Verstärkungselement in direkten Kontakt mit zumindest einem Teil der äußeren Oberfläche des durch den Abschnitt in Form eines Lagenabschlusses (20) gebildeten dicht verschlossenen Hohlraums (30) gebracht ist.

7. Radialer Luftreifen nach mindestens einem der vorhergehenden Ansprüche, wobei die Lauffläche (3) eine oder mehrere Rillen (12) und eine oder mehrere Schichten aus einer Polymerzusammensetzung umfasst.

8. Radialer Luftreifen nach mindestens einem der vorhergehenden Ansprüche, wobei, wenn der Reifen (1) auf die ETRTO-Nennfelge angebracht und auf einen Druck von 2,2 bar aufgepumpt ist, der Reifen (1) ferner eine Schutzlage (13) und eine Schicht in Form eines Gürtels oder ein Gürtelpaket (8) umfasst, das eine oder mehrere Lage in Form eines Gürtels (9) umfasst; wobei sich die Schutzlage (13) zwischen der Lauffläche (3) und der Schicht in Form eines Gürtels oder dem Gürtelpaket (8) befindet und sich die Schicht in Form eines Gürtels oder das Gürtelpaket (8) zwischen der Schutzlage (13) und der Karkassenlage (5) angebracht ist; wobei zumindest eine Schicht in Form eines Gürtels oder eine Lage in Form eines Gürtels (9, P_{B}) eine axiale Breite (W_{PB}) aufweist, deren Wert in dem Bereich liegt, der von 80 bis 100 Prozent, vorzugsweise von 85 bis 95 Prozent der axialen Felgenbreite (W_{R}) darstellt.

9. Radialer Luftreifen nach Anspruch 8, wobei, wenn der Reifen (1) auf die ETRTO-Nennfelge angebracht und auf einen Druck von 2,2 bar aufgepumpt ist:
(i) die zumindest eine Lage oder Schicht in Form eines Gürtels (9, P₈) über eine axiale Breite (Wₚₐᵣ) parallel zur Karkassenlage (5, P_{C}) angebracht ist; wobei die oben genannte axiale Breite (Wₚₐᵣ) einen Wert aufweist, der sich in einem Bereich befindet, der 80 bis 95 Prozent der axialen Felgenbreite (W_{R}) darstellt, wobei Wₚₐᵣ < W_{PB} ist; und/oder
(ii) die Lauffläche (3), die eine oder mehrere Rillen (12) umfasst, eine radiale Dicke (T_{GB}) aufweist, die in dem Bereich von 1 bis 3,4 mm liegt; wobei die oben genannte Radialdicke (T_{GB}) als der minimale Radialabstand zwischen der tiefsten äußeren Oberfläche der oben genannten einen oder mehreren Rillen (12) und der äußersten Oberfläche, in der radialen Richtung, des Nylongürtels (13) definiert ist.

10. Radialer Luftreifen nach mindestens einem der vorstehenden Ansprüche 8 oder 9, wobei die zumindest eine Schicht in Form eines Gürtels (9, P₈) eine Kautschukzusammensetzung umfasst, in die Korde oder Wulstkabel zur Verstärkung, vorzugsweise Korde oder Wulstkabel aus Stahl oder Aramid, eingebettet sind.

11. Radialer Luftreifen nach mindestens einem der vorhergehenden Ansprüche, wobei jeder Abschnitt in Form einer Seitenwand (4) eine Schicht in Form einer Seitenwand aufweist, die sich von der Außenfläche in der axialen Richtung der Karkasse (5) bis zur Außenfläche in der axialen Richtung des Abschnitts in Form einer Seitenwand erstreckt und eine Dicke (T_{WS}) aufweist; wobei die oben genannte Dicke (T_{WS}) einen Mindestwert aufweist, der sich in dem Bereich von 1 bis 5 mm liegt.

12. Radialer Luftreifen nach zumindest einem der vorhergehenden Ansprüche, in dem, wenn der Reifen (1) auf die ETRTO-Nennfelge angebracht und auf einen Druck von 2,2 bar aufgepumpt ist, die axiale Breite der Karkassenlage (W_{P}) einen Wert aufweist, der in dem Bereich liegt, der 95 bis 116 Prozent der Felgenbreite (W_{R}) darstellt; wobei die Felgenbreite (W_{R}) der maximale axiale Abstand zwischen der Karkassenlage (5) in dem ersten Abschnitt in Form einer Seitenwand und der Karkassenlage (5) in dem zweiten Abschnitt in Form einer Seitenwand ist.

13. Radialer Luftreifen nach zumindest einem der vorhergehenden Ansprüche, wobei der Reifen (1) ein Radialreifen für Personenkraftwagen ist.

## Revendications

1. Bandage pneumatique du type à nappe radiale, qui comprend une carcasse de bandage ; dans lequel le bandage (1) comprend :
une portion en forme de bande de roulement, qui comprend une bande de roulement (3) disposée sur la carcasse du bandage ;
une paire de portions en forme de flancs (4) adjacentes à la portion en forme de bande de roulement ;
une nappe en forme de carcasse (5, P_{c}) qui s'étend dans la direction circonférentielle autour du bandage (1) et qui présente deux portions en forme de terminaison de nappe (20) ; dans lequel chaque portion en forme de terminaison de nappe (20) comprend un premier tronçon (21, S₁) de mise en contact avec la nappe, qui est adjacent à un tronçon de retournement de nappe (22, S_{T}) ; dans lequel ledit tronçon de retournement de nappe (22, S_{T}) est adjacent à un deuxième tronçon (23, S₂) de mise en contact avec la nappe ; dans lequel ledit deuxième tronçon (23, S₂) de mise en contact avec la nappe forme l'extrémité de la portion en forme de terminaison de nappe (20) ou englobe ladite extrémité ;
une paire de portions en forme de talons, adjacentes aux portions en forme de flancs (4) ; dans lequel chaque portion en forme de talon comprend une tringle de talon (7), un ou plusieurs éléments en forme de bourrage sur tringle (6) et une des deux portions en forme de terminaison de nappe (20) de ladite nappe en forme de carcasse (5, P_{c}) ;
dans lequel, dans chaque portion en forme de talon, la portion en forme de terminaison de nappe (20) qui y est comprise forme une enceinte fermée de manière étanche (30) qui contient la tringle de talon (7) ; dans lequel ladite enceinte fermée de manière étanche (30) présente un tronçon (11, S_{c}) de mise en contact de nappe à nappe que l'on obtient à partir du premier tronçon (21, S₁) de mise en contact avec la nappe et du deuxième tronçon (23, S₂) de mise en contact avec la nappe ; et présente en outre un tronçon périphérique réalisé à partir du tronçon de retournement de nappe (22, S_{T}) ;
dans lequel, dans chaque portion en forme de talon, au moins un élément en forme de bourrage sur tringle (6, E_{A}) parmi lesdits un ou plusieurs éléments en forme de bourrage sur tringle (6) est situé à l'extérieur, dans la direction axiale, du tronçon (11, S_{c}) de mise en contact de nappe à nappe ; et dans lequel au moins une portion de la surface interne, dans la direction axiale, dudit au moins un élément en forme de bourrage sur tringle (6, E_{A}), est mis en contact direct avec une surface externe, dans la direction axiale, du tronçon (11, S_{c}) de mise en contact de nappe à nappe ; et
dans lequel la hauteur (H_{A}) du bourrage sur tringle est supérieure à la hauteur (H_{P}) de la terminaison de nappe ; dans lequel la hauteur (H_{P}) de la terminaison de nappe est définie comme étant la distance en direction radiale entre la pointe de talon (10) et le point le plus externe, dans la direction radiale, ou l'extrémité de la portion en forme de terminaison de nappe (20) ;
**caractérisé en ce que**, lorsque le bandage (1) est monté sur la jante nominale ETRTO et est gonflé à une pression de 2,2 bar :
(i) la hauteur (H_{P}) de la terminaison de nappe, dans chaque portion en forme de talon, se situe dans la plage qui va de 2,54 cm et 4,46 cm ; dans lequel la hauteur (H_{P}) de la terminaison de nappe est définie comme étant la distance en direction radiale entre la pointe de talon (10) et le point le plus externe, dans la direction radiale, ou l'extrémité de la portion en forme de terminaison de nappe (20) ; et
(ii) lequel la hauteur (H_{A}) du bourrage sur tringle, dans chaque portion en forme de talon, se situe dans la plage qui va de 2,79 cm et 6,35 cm ; dans lequel la hauteur (H_{A}) du bourrage sur tringle est définie comme étant la distance maximale, dans la direction radiale, entre la pointe de talon et l'élément en forme de bourrage sur tringle (E_{A}).

2. Bandage pneumatique du type à nappe radiale selon la revendication 1, dans lequel, dans chaque portion en forme de talon, la portion en forme de terminaison de nappe (20) est retournée vers le haut vers l'extérieur, dans la direction radiale ; et dans lequel, dans le tronçon (11, S_{c}) de mise en contact de nappe à nappe, le deuxième tronçon (23, S₂) de mise en contact avec la nappe est situé à l'extérieur, dans la direction radiale, du premier tronçon (21, S₁) de mise en contact avec la nappe.

3. Bandage pneumatique du type à nappe radiale selon la revendication 1 ou 2, dans lequel, dans chaque portion en forme de talon, aucun desdits un ou plusieurs éléments en forme de bourrage sur tringle (6) n'est contenu dans l'enceinte fermée de manière étanche (30).

4. Bandage pneumatique du type à nappe radiale selon au moins une des revendications précédentes, dans lequel chaque tringle de talon (7) possède une section transversale qui possède essentiellement la forme d'un pentagone, et, de manière facultative dans lequel au moins deux côtés de la section transversale de la tringle de talon (7), qui possède essentiellement la forme d'un pentagone, présentent la même longueur.

5. Bandage pneumatique du type à nappe radiale selon au moins une des revendications précédentes, dans lequel chaque tringle de talon (7) comprend une composition élastomère et des fils de tringles.

6. Bandage pneumatique du type à nappe radiale selon au moins une des revendications précédentes, dans lequel, dans les portions en forme de talons, aucun élément de renforcement n'est mis en contact direct avec au moins une partie de la surface externe de l'enceinte fermée de manière étanche (30) formée par l'intermédiaire de la portion en forme de terminaison de nappe (20).

7. Bandage pneumatique du type à nappe radiale selon au moins une des revendications précédentes, dans lequel la bande de roulement (3) comprend une ou plusieurs rainures (12) et une ou plusieurs couches d'une composition polymère.

8. Bandage pneumatique du type à nappe radiale selon au moins une des revendications précédentes, dans lequel, lorsque le bandage (1) est monté sur la jante nominale ETRTO et est gonflé à une pression de 2,2 bar, le bandage (1) comprend en outre une nappe de protection (13) et une couche en forme de ceinture ou un paquet de ceintures (8) qui comprend une ou plusieurs nappes de ceintures (9) ; dans lequel la nappe de protection (13) est située entre la bande de roulement (3) et la couche en forme de ceinture ou le paquet de ceintures (8) et la couche en forme de ceinture ou le paquet de ceintures (8) est situé entre la nappe de protection (13) et la nappe en forme de carcasse (5) ; dans lequel au moins une couche en forme de ceinture ou une nappe en forme de ceinture (9, P_{B}) possède une largeur axiale (W_{PB}) dont la valeur se situe dans une plage qui représente de 80 à 100 pour cent, de préférence de 85 à 95 pour cent de la largeur de jante axiale (W_{R}).

9. Bandage pneumatique du type à nappe radiale selon la revendication 8, dans lequel, lorsque le bandage (1) est monté sur la jante nominale ETRTO et est gonflé à une pression de 2,2 bar :
(i) ladite au moins une nappe ou couche en forme de ceinture (9, P₈) est disposée parallèlement à la nappe en forme de carcasse (5, P_{C}) sur une largeur axiale (Wₚₐᵣ) ; dans lequel ladite largeur axiale (Wₚₐᵣ) possède une valeur qui se situe dans une plage qui représente de 80 à 95 pour cent de ladite largeur de jante axiale (W_{R}), étant entendu que Wₚₐᵣ < W_{PB} ; et/ou
(ii) la bande de roulement (3), qui comprend une ou plusieurs rainures (12), possède une épaisseur radiale (T_{GB}) qui se situe dans la plage qui va de 1 à 3,4 mm ; dans lequel ladite épaisseur radiale (T_{GB}) est définie comme étant la distance radiale minimale entre la surface externe la plus profonde desdites une ou plusieurs rainures (12) et la surface la plus externe, dans la direction radiale, de la nappe de protection (13).

10. Bandage pneumatique du type à nappe radiale selon au moins une des revendications précédentes 8 ou 9, dans lequel ladite au moins une nappe en forme de ceinture (9, P₈) comprend une composition de caoutchouc qui comprend, a l'état encastré dans cette dernière, des câblés ou des tringles métalliques de renforcement, de préférence des câblés ou des tringles en acier ou en aramide.

11. Bandage pneumatique du type à nappe radiale selon au moins une des revendications précédentes, dans lequel chaque portion en forme de flanc (4) comprend une couche en forme de flanc qui s'étend à partir de la surface externe, dans la direction axiale, de la nappe en forme de carcasse (5) jusqu'à la surface externe, dans la direction axiale, de la portion en forme de flanc et qui possède une épaisseur (T_{S}) ; dans lequel ladite épaisseur (T_{WS}) possède une valeur minimale qui se situe dans la plage qui va de 1 à 5 mm.

12. Bandage pneumatique du type à nappe radiale selon au moins une des revendications précédentes, dans lequel, lorsque le bandage (1) est monté sur la jante nominale ETRTO et est gonflé à une pression de 2,2 bar, la largeur axiale de la nappe en forme de carcasse (W_{P}) possède une valeur qui se situe dans une plage qui représente de 95 à 116 pour cent de la largeur de jante (W_{R}) ; dans lequel la largeur de jante (W_{R}) représente la distance axiale maximale qui s'étend entre la nappe en forme de carcasse (5) dans la première portion en forme de flanc et la nappe en forme de carcasse (5) dans la deuxième portion en forme de flanc.

13. Bandage pneumatique du type à nappe radiale selon au moins une des revendications précédentes, dans lequel le bandage (1) est un bandage pneumatique du type à nappe radiale qui est destiné à des véhicules de tourisme.
